# EUROPÄISCHE PATENTSCHRIFT

(11) **EP 4 025 878 B1**
(45) Veröffentlichungstag und Bekanntmachung des Hinweises auf die Patenterteilung: **19.11.2025**
(21) Anmeldenummer: 20764327.1
(22) Anmeldetag: 25.08.2020
(51) Int. Cl.: G01D 11/24, G01P 1/02, G01D 5/245

(54) **FAHRZEUGDREHZAHLSENSOR UND VERFAHREN ZUR DESSEN HERSTELLUNG**
ROTATIONAL SPEED SENSOR FOR A VEHICLE AND METHOD FOR THE PRODUCTION THEREOF
CAPTEUR DE VITESSE DE ROTATION POUR UN VÉHICULE AINSI QU'UN PROCÉDÉ POUR SA FABRICATION

(30) Priorität: 06.09.2019 DE 102019123991
(43) Veröffentlichungstag der Anmeldung: 13.07.2022
(73) Patentinhaber: KNORR-BREMSE Systeme für Nutzfahrzeuge GmbH, 80809 München (DE)
(72) Erfinder: KLUFTINGER, Andre, 63924 Kleinheubach (DE); WIEDER, Gerhard, 74354 Besigheim (DE); LECHNER, Klaus, 91362 Pretzfeld (DE); JAWARIKAR, Pravin, 444303 Distr. Buldhana (IN); SCHMID, Karl-Heinz, 74354 Besigheim (DE)
(86) Internationale Anmeldenummer: PCT/EP2020/073688
(87) Internationale Veröffentlichungsnummer: WO 2021/043619

(56) Entgegenhaltungen:
- EP-A1- 3 070 439
- DE-A1- 102004 060 297
- DE-A1- 102009 046 439
- DE-A1- 102017 007 399
- DE-A1- 19 612 765

## Beschreibung

Die vorliegende Erfindung bezieht sich auf einen Fahrzeugdrehzahlsensor, insbesondere für Nutzfahrzeuge, auf ein Verfahren zu dessen Herstellung und insbesondere auf einen kurzen axialen Drehzahlsensor mit geführtem Kabelabgang.

Konventionelle Drehzahlsensoren kommen im Allgemeinen in zwei Sensorvarianten zum Einsatz: (i) in axialer Kopfform als ein I-förmig oder stabförmig gebildeter Sensor oder (ii) in radialer Kopfform, bei der der Kabelabgang zum Sensorkopf um 90° abgewinkelt ist, so dass ein L-förmiger Sensor entsteht. Die genutzte Bauform ergibt sich aus der Einbausituation bzw. dem gewünschten Verlauf einer Kabelführung.

DE 10 2004 060 297 A1 offenbart eine konventionelle Magnetsensoranordnung mit einer Sekundärverpackung, DE 10 2009 046 439 A1 offenbart eine konventionelle Sensoreinheit mit einer Kunststoffummantelung, DE 196 12 795 A1 offenbart einen konventionellen Kunststoffsensor mit einer Tülle, DE 10 2017 007 399 A1 offenbart einen konventionellen Drehzahlsensor mit einer Kabelausgangskappe und EP 3 070 439 A1 offenbart ein Sensorgehäuse mit einem Sekundärgehäuse.

Ein Nachteil dieser konventionellen Drehzahlsensoren ergibt sich aus dem akribisch zu führendem Kabel an der Achse entlang bzw. vom Sensor weg. Diese Forderung ergibt sich aus den speziellen Anwendungen, um eine korrekte Arbeitsweise zu gewährleisten. Bei konventionellen Drehzahlsensoren sind beispielsweise keine Anpassungen des Sensorelementes gegenüber dem Polrad möglich. Insbesondere wenn neuere Sensorelemente (z.B. magnetoresistive) zum Einsatz kommen soll, ist die Orientierung wichtig, sodass die genannten Einschränkungen oft nicht hinnehmbar sind.

Daher besteht ein Bedarf nach weiteren Fahrzeugdrehzahlsensoren, die mehr Freiheit hinsichtlich des Einsatzes ermöglichen, gleichzeitig jedoch keine Einschränkung hinsichtlich des Bauraumes erfordern.

Zumindest ein Teil der obengenannten Probleme wird durch einen Fahrzeugdrehzahlsensor nach Anspruch 1 oder ein Verfahren zu dessen Herstellung nach Anspruch 4 gelöst. Die abhängigen Ansprüche definieren weitere vorteilhafte Ausführungsformen der Gegenstände der unabhängigen Ansprüche.

Die vorliegende Erfindung bezieht sich auf einen Fahrzeugdrehzahlsensor mit einem Sensorelement, einem zylindrischen Sensorgehäuse, in dem das Sensorelement untergebracht oder eingebettet ist, einem elektrischen Anschlusskabel, das aus dem Sensorgehäuse herausgeführt ist, und einem Biege-Begrenzungselement. Das Biege-Begrenzungselement ist ausgebildet ist, einen Krümmungsradius des Anschlusskabels direkt in einem Herausführbereich des Anschlusskabels aus dem zylindrischen Gehäuse zu begrenzen.

Optional begrenzt das Biege-Begrenzungselement den Krümmungsradius sowohl durch einen Maximalwert und/oder einen Minimalwert. Dadurch wird eine Führung des Anschlusskabels in eine gewünschte (Vorzugs-) Richtung möglich.

Das Sensorelement ist zumindest teilweise in einem Kunststoffmaterial (z.B. eine Umspritzmasse oder Vergussmasse) eingebettet und das Biege-Begrenzungselement ist als ein Anspritzteil aus einem gleichen Material wie das Kunststoffmaterial gefertigt. Das Kunststoffmaterial ist innerhalb einer (Metall-) Ummantelung, die Teil des Sensorgehäuses sein kann, gebildet. Das Sensorelement ist mit einer Umspritzmasse umspritzt.

Das Biege-Begrenzungselement erstreckt sich trompetenförmig um das Anschlusskabel herum.

Optional ist das Biege-Begrenzungselement ausgebildet, um eine Herausführung des Anschlusskabels parallel zur axialen Achse des zylindrischen Sensorgehäuses zu verhindern oder zumindest zu erschweren. Es kann beispielsweise einen kraftschlüssigen Verbund (z.B. über eine Vorspannung) mit dem Anschlusskabel bilden, sodass es einen zusätzlichen Schutz vor dem mechanischen Lösen des Anschlusskabels oder des Lösens durch Vibrationen bietet.

Ausführungsbeispiele beziehen sich auch auf ein Verfahren zur Herstellung des Fahrzeugdrehzahlsensors (z.B. wie er zuvor definiert wurde). Das Verfahren umfasst:
- Bereitstellen eines Sensorelements;
- Bilden eines zylindrischen Sensorgehäuses, das zumindest teilweise das Sensorelement einbettet;
- Ausbilden eines elektrischen Anschlusskabels, das aus dem Sensorgehäuse herausgeführt wird;
- Ausbilden eines Biege-Begrenzungselement, um einen Krümmungsradius des Anschlusskabels in einem Herausführbereich aus dem zylindrischen Gehäuse zu begrenzen.

Das Bilden des zylindrischen Sensorgehäuses umfasst einen Schritt des Umspritzens, bei dem das Biege-Begrenzungselement in das Umspritzwerkzeug zumindest teilweise eingelegt wird. Dadurch kann fest mit dem Sensorgehäuse verbunden werden.

Das Bilden des Biege-Begrenzungselement umfasst auch ein Anspritzen an das Sensorgehäuse.

Das Bilden des Biege-Begrenzungselement umfasst auch ein Umklammern oder Umgreifen des Biege-Begrenzungselement um das Anschlusskabel.

Es versteht sich, dass die Reihenfolge der Verfahrensschritte nur insoweit zwingend ist, wie es für den gewünschten Effekt zwingend ist. Abgesehen hiervon können die Verfahrensschritte in beliebiger Reihenfolge ausgeführt werden.

Die genannten Ausführungsbeispiele bieten den Vorteil, dass das Sensorgehäuse verkürzt gebildet werden kann, sodass verschiedene Kabelabgangsrichtungen ermöglicht werden. Damit können Sensorelemente, die eine bestimmte Richtung zur Sensorsignalerfassung brauchen (z.B. basierend magnetoresistiven Effekte wie Hall-, GMR-, TMR-, AMR-Sensoren), vorteilhaft eingesetzt werden, da der Kabelabgang noch keine Richtung vorgibt. Ausführungsbeispiele begrenzen nur den Krümmungsradius, nicht jedoch die Richtung/den Winkel wohin das Anschlusskabel beim Herausführen gebogen wird. Es kann daher eine vorteilhafte Kabelverlegung oder Kabelführung von dem Sensorelement weg frei gewählt werden. Damit verringert sich die Varianz verschiedener konventionellen Drehzahlsensoren. Außerdem kann der Abgangsradius bis zu einer Begrenzung, die durch das Biege-Begrenzungselement definiert wird, frei gewählt werden, so dass das Kabel unter (nahezu) jedem Winkel weggeführt werden kann.

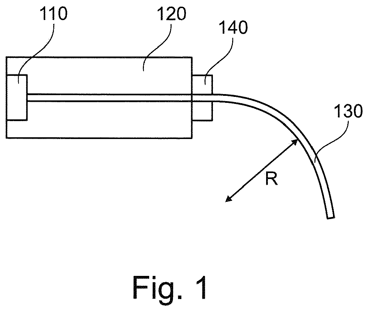

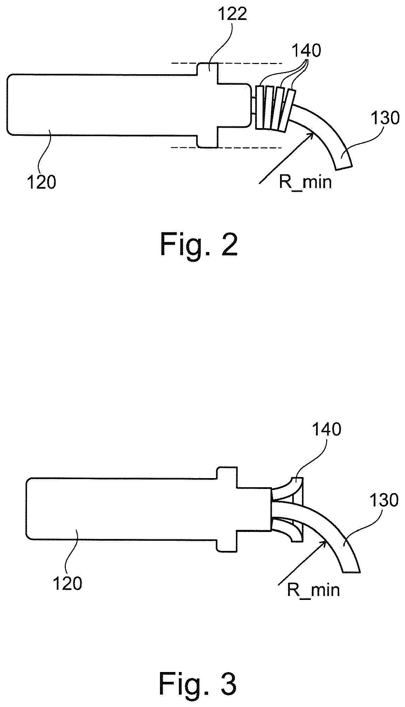

Es wird betont, dass die Beispiele der Figuren 1 und 2 nicht in den Anwendungsbereich der beigefügten Ansprüche fallen, und keine Ausführungsformen der vorliegenden Erfindung sind. Sie stellen lediglich nicht zur Erfindung gehörende Beispiele dar.
- Fig. 1: zeigt einen Drehzahlsensor gemäß einem Ausführungsbeispiel der vorliegenden Erfindung.
- Fig. 2: zeigt eine Ausführungsform für das Biege-Begrenzungselement.
- Fig. 3: zeigt eine weitere Ausführungsform für das Biege-Begrenzungselement.
- Fig. 4: zeigt eine Flussdiagram für ein Verfahren zur Herstellung des Drehzahlsensors gemäß einem weiteren Ausführungsbeispiels.

**Fig. 1** zeigt einen Fahrzeugdrehzahlsensor, der insbesondere für Nutzfahrzeuge eingesetzt werden kann. Gemäß einem Ausführungsbeispiel umfasst der Fahrzeugdrehzahlsensor ein Sensorelement 110, ein zylindrisches Sensorgehäuse 120, in dem das Sensorelement 120 untergebracht ist, und ein elektrisches Anschlusskabel 130, das aus dem Sensorgehäuse 120 herausgeführt wird. Außerdem umfasst der Fahrzeugdrehzahlsensor ein Biege-Begrenzungselement 140, das ausgebildet ist, einen Krümmungsradius R des Anschlusskabels 130 direkt in einem Herausführbereich des Anschlusskabels 130 aus dem zylindrischen Sensorgehäuse 120 zu begrenzen.

Das Sensorgehäuse 120 kann beispielsweise einteilig oder mehrteilig gebildet sein. So kann das Sensorgehäuse 120 beispielsweise eine äußere Metallhülse (z.B. aus nichtmagnetisierbarem Material) und eine darin ausgebildete Umspritzmasse umfassen, in die das Sensorelement 110 zumindest teilweise eingebettet sein kann oder die zumindest Halt bietet. Ebenso ist es möglich, dass das Sensorgehäuses 120 das Sensorelement 110 in einer gewünschten Position und/oder in einer gewünschten Orientierung relativ zu dem Sensorgehäuse 120 hält. Durch eine optionale, von außen sichtbare Markierung kann diese Orientierung angezeigt werden, sodass ein korrekter Einbau sichergestellt werden kann.

Das Biege-Begrenzungselement 140 kann direkt mit der beispielhaften Umspritzmasse oder der Vergussmasse innerhalb des Sensorgehäuses 120 verbunden sein und ein gleiches oder ähnliches Material aufweisen. Optional ist es ebenfalls möglich, dass das Biege-Begrenzungselement 140 ein anderes Material umfasst. Es ist weiter möglich, dass das Biege-Begrenzungselement 140 als ein Einlegeteil in dem Umspritzwerkzeug beim Ausbilden des Sensorgehäuses 120 bzw. der Umspritzmasse innerhalb einer äußeren Metallhülse eingelegt wird, sodass es während des Umspritzprozesses fest mit dem Sensorgehäuse 120 verbunden wird.

Das Biege-Begrenzungselement 140 kann beispielsweise den Krümmungsradius R beim Herausführen aus dem Sensorgehäuse 120 innerhalb eines Bereiches, der durch einen Minimalwert (z.B. 20 mm oder 25 mm) und Maximalwert (50 mm oder 100 mm) begrenzt wird, einschränken. Ebenso ist es möglich, dass das Biegebegrenzungselement 140 den Krümmungsradius R nur nach unten begrenzt (d.h. nur die Maximalkrümmung/-biegung des Kabels) und eine axiale drahtförmige Herausführung des Anschlusskabels 130 aus dem Sensorgehäuse 120 weiterhin möglich ist. Das Sensorgehäuse 120 kann beispielsweise einen Durchmesser in einem Bereich zwischen 10 mm und 30 mm (oder ca. 16 mm) aufweisen. Es kann aber auch andere Abmaße haben.

**Fig. 2** zeigt ein Ausführungsbeispiel für das Biege-Begrenzungselement 140 in Form einer Vielzahl von Lamellen, die sich um das Anschlusskabel 130 herum erstrecken und im Bereich der Herausführung des Anschlusskabels 130 aus dem Sensorgehäuse 120 ausgebildet sind. Die Lamellen können beispielsweise fest (formschlüssig oder kraftschlüssig) mit dem Sensorgehäuse 120 (z.B. mit der Umspritzmasse) verbunden sein. Die Lamellen kann aber auch als Klammern oder Aufsteckelemente ausgebildet sein, die nach dem Ausbilden des Sensorgehäuses 120 mit dem Kabel 130 auf das Anschlusskabel 130 aufgesetzt werden. Sie brauchen auch nicht zwingend mit dem Sensorgehäuse 120 fest verbunden werden. Wichtig ist, dass sie die Krümmung des Anschlusskabels 130 begrenzen.

In dem in der Fig. 2 gezeigten Ausführungsbeispiel umfasst das Sensorgehäuse 120 einen Kragen 122, der einen Anschlag bei dem Einsetzen des Drehzahlsensors bieten. Dieser Kragen 122 erstreckt sich beispielsweise um 4 mm ...10 mm (oder ca. 6 mm) radial weiter nach außen als der Rest des Sensorgehäuses 120.

Die Vielzahl von Lamellen für das Biege-Begrenzungselement 140 können beispielsweise derart gebildet sein, dass das Anschlusskabel 130 nur in einem Bereich, das heißt begrenzt durch einen Minimalwert und einen Maximalwert, für den Krümmungsradius R aus dem Sensorgehäuse 120 herausgeführt werden können. Dies kann beispielsweise dadurch erreicht werden, dass die einzelnen Lamellen miteinander verbunden sind und nicht frei drehbar zueinander sind und die Lamellen einem Bereich (z.B. oben in der Fig. 2) dicker ausgebildet sind als einem gegenüberliegenden Bereich (z.B. unten in der Fig. 2).

**Fig. 3** zeigt ein weiteres Ausführungsbeispiel, welches sich von dem Ausführungsbeispiel der Fig. 2 nur dadurch unterscheidet, dass das Biege-Begrenzungselement 140 als eine trompetenförmige Verbreiterung am Ende des Sensorgehäuses 120 ausgebildet ist. Insbesondere in diesem Ausführungsbeispiel ist es möglich, dass das Biege-Begrenzungselement 140 zusammen mit einer beispielhaften Umspritzmasse des Sensorgehäuse 120 oder als ein Teil davon gebildet wird. Das in der Fig. 3 gezeigte Biege-Begrenzungselement 140 ist ausgebildet, um den Krümmungsradius R nach unten zu begrenzen, nicht jedoch hinsichtlich eines Maximalwertes. Dementsprechend kann bei dem Ausführungsbeispiel der Fig. 3 das Anschlusskabel 130 parallel zur axialen Achse des zylinderförmig ausgebildeten Sensorgehäuses 120 herausgeführt werden.

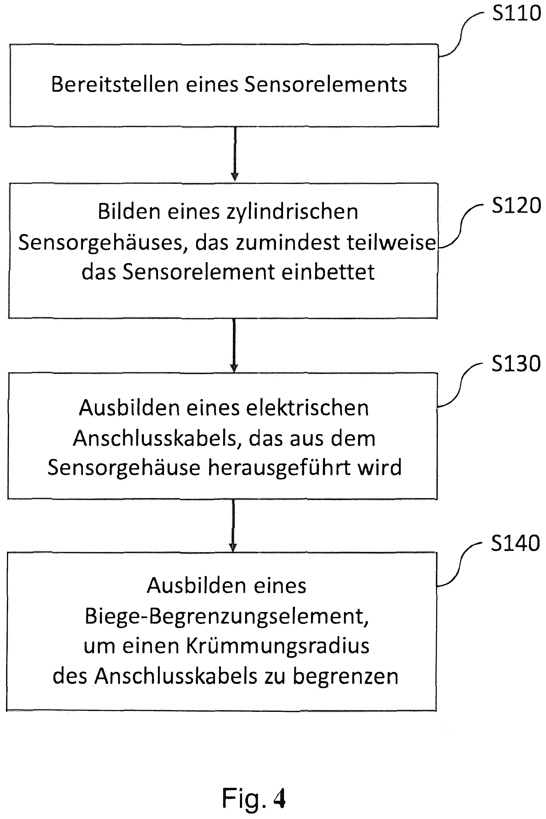

**Fig. 4** zeigt ein Flussdiagramm für ein Verfahren zur Herstellung eines Fahrzeugdrehzahlsensors. Das Verfahren umfasst:
- Bereitstellen S110 eines Sensorelements 110;
- Bilden S120 eines zylindrischen Sensorgehäuses 120, das zumindest teilweise das Sensorelement 110 einbettet;
- Ausbilden S130 eines elektrischen Anschlusskabels 130, das aus dem Sensorgehäuse 110 herausgeführt wird;
- Ausbilden S140 eines Biege-Begrenzungselement 140, um einen Krümmungsradius R des Anschlusskabels 130 in einem Herausführbereich aus dem zylindrischen Gehäuse 120 zu begrenzen.

Insbesondere umfasst das Verfahren einen Umspritzprozess, wobei das Biege-Begrenzungselement 140 während des Umspritzens ausgebildet oder als ein Einlegeteil in das Umspritzwerkzeug eingelegt wird und so fest mit Sensorgehäuse 120 verbunden wird.

Die so hergestellten Fahrzeugdrehzahlsensoren ermöglichen die Umsetzung beider Kabelverlegerpositionen (axial oder radial) mit nur einer Sensorform. Das ist ein erheblicher Vorteil gegenüber konventionellen Drehzahlsensoren. Dieser Vorteil wird durch das Begrenzungselement 140 für die Kabelbiegung R erreicht, um so einen mechanischen Anschlag in beiden Einbaupositionen zu ermöglichen. Das Biege-Begrenzungselement 140 ist gemäß Ausführungsbeispielen insbesondere dazu ausgelegt, um ein Quetschen oder Knicken des Kabels am Kabelabgang zu verhindern. Dies wird dadurch erreicht, dass ein minimaler Biegeradius nicht unterschritten werden darf und kann.

Zusammenfassend kann das Biege-Begrenzungselement 140 u.a. wie folgt ausgebildet sein:
- als ein Anspritzteil aus dem gleichen Material wie das Sensorgehäuse 120 bzw. wie die Umspritzmasse in einer metallischen Ummantelung;
- ein Zwei-Komponenten-Material umfassen.

Weitere Vorteile von Ausführungsbeispielen sind dadurch gegeben, dass in jedem Fahrzeugdrehzahlsensor mit dem Biege-Begrenzungselement 140 ein Schutz vor dem Abvibrieren des Kabels direkt am Sensorkopf erreicht wird. Außerdem ermöglicht die Limitierung des Biegeradius des Kabels auf einen einstellbaren maximalen Radius eine Entlastung des Kabels am Sensor hinsichtlich einer Zugkraft.

Ein besonderer Vorteil von Ausführungsbeispielen ergibt sich dadurch, dass der Fahrzeugdrehzahlsensor mit dem Biege-Begrenzungselements 140 verkürzt ausgeführt werden kann. Und trotz der kurzen Ausführung, ist es möglich, die Kabelverlegung an der axialen Achse in der gleichen Form auszuführen, wie es bei den bisherigen radialen Sensorvarianten geschieht.

Die vorliegende Erfindung ist durch die unabhängigen Ansprüche definiert, und vorteilhafte Ausführungsformen werden in den abhängigen Ansprüchen beschrieben.

### BEZUGSZEICHENLISTE

- 110: Sensorelement
- 120: zylindrischen Sensorgehäuse
- 122: Kragen des Sensorgehäuses
- 130: Anschlusskabel
- 140: Biege-Begrenzungselement
- R: Krümmungsradius

## Patentansprüche

1. Fahrzeugdrehzahlsensor mit einem Sensorelement (110), einem zylindrischen Sensorgehäuse (120), in dem das Sensorelement (110) untergebracht ist, und einem elektrischen Anschlusskabel (130), das aus dem Sensorgehäuse (120) herausgeführt ist, wobei das Sensorelement (110) mit einer Umspritzmasse umspritzt ist,
wobei ein Biege-Begrenzungselement (140) dazu ausgebildet ist, einen Krümmungsradius (R) des Anschlusskabels (130) direkt in einem Herausführbereich des Anschlusskabels (130) aus dem zylindrischen Sensorgehäuse (120) zu begrenzen, sodass ein Abgangsradius bis zu einer Begrenzung, die durch das Biege-Begrenzungselement (140) definiert wird, frei gewählt werden und das Kabel unter jedem Winkel weggeführt werden kann, **dadurch gekennzeichnet, dass** das Biege-Begrenzungselement (140) als ein Anspritzteil am Sensorgehäuse (120) aus einem gleichen Material wie die Umspritzmasse gefertigt ist, und sich trompetenförmig um das Anschlusskabel (130) herum erstreckt, und
**dadurch, dass**
das Sensorgehäuse (120) eine Metallhülse umfasst, in welchem die Umspritzmasse mit eingebetteten Sensorelement ausgebildet ist.

2. Fahrzeugdrehzahlsensor nach Anspruch 1,
**dadurch gekennzeichnet, dass**
das Biege-Begrenzungselement (140) den Krümmungsradius (R) sowohl durch einen Maximalwert und/oder einen Minimalwert begrenzt.

3. Fahrzeugdrehzahlsensor nach einem der vorhergehenden Ansprüche,
**dadurch gekennzeichnet, dass**
das Biege-Begrenzungselement (140) ausgebildet ist, um eine Herausführung des Anschlusskabels (130) parallel zur axialen Achse des zylindrischen Sensorgehäuses (120) zu verhindern oder zumindest zu erschweren.

4. Verfahren zur Herstellung: eines Fahrzeugdrehzahlsensors, mit:
- Bereitstellen (S110) eines Sensorelements (110);
- Bilden (S120) eines zylindrischen Sensorgehäuses (120) aus einer Umspritzmasse, das zumindest teilweise das Sensorelement (110) durch Umspritzen einbettet;
- Ausbilden (S130) eines elektrischen Anschlusskabels (130), das aus dem Sensorgehäuse (120) herausgeführt wird,
- Ausbilden (S140) eines Biege-Begrenzungselement (140), um einen Krümmungsradius (R) des Anschlusskabels (130) in einem Herausführbereich aus dem zylindrischen Gehäuse (120) zu begrenzen, sodass ein Abgangsradius bis zu einer Begrenzung, die durch das Biege-Begrenzungselement (140) definiert wird, frei gewählt werden und das Kabel unter jedem Winkel weggeführt werden kann,
**dadurch gekennzeichnet, dass** das Ausbilden (S140) des Biege-Begrenzungselement (140) ein Anspritzen an das Sensorgehäuse (120) als trompetenförmiges Anspritzteil aus einem gleichen Material wie die Umspritzmasse Umgreifen des Biege-Begrenzungselement (140) um das Anschlusskabel (130) umfasst,
und wobei das Sensorgehäuse (120) mit einer Metallhülse gebildet wird, in welchem die Umspritzmasse mit eingebetteten Sensorelement ausgebildet ist.

## Claims

1. Vehicle rotational speed sensor having a sensor element (110), a cylindrical sensor housing (120) in which the sensor element (110) is accommodated, and an electrical connection cable (130) which is guided out of the sensor housing (120), wherein the sensor element (110) is overmolded with an overmolding compound, wherein
a bend-limiting element (140) is configured to limit a radius of curvature (R) of the connection cable (130) directly in a region in which the connection cable (130) is guided out of the cylindrical sensor housing (120), so that an exit radius up to a limit defined by the bend-limiting element (140) can be freely selected and the cable can be led away at any angle, **characterized in that**
the bend-limiting element (140) is produced as an injection molding on the sensor housing (120) from a material identical to that of the overmolding compound, and
extends in the shape of a trumpet around the connection cable (130), and **in that**
the sensor housing (120) comprises a metal sleeve in which the overmolding compound with embedded sensor element is formed

2. Vehicle rotational speed sensor according to claim 1,
**characterized in that**
the bend-limiting element (140) limits the radius of curvature (R) by both a maximum value and/or a minimum value.

3. Vehicle rotational speed sensor according to any one of the preceding claims,
**characterized in that**
the bend-limiting element (140) is configured to prevent the connection cable (130) from being guided out parallel to the axial axis of the cylindrical sensor housing (120), or at least to make this more difficult.

4. Method for producing a vehicle rotational speed sensor, comprising:
- providing (S110) a sensor element (110);
- forming (S120) a cylindrical sensor housing (120) from an overmolding compound, the sensor element (110) being embedded at least partially by overmolding;
- forming (S130) an electrical connection cable (130) which is guided out of the sensor housing (120),
- forming (S140) a bend-limiting element (140) in order to limit a radius of curvature (R) of the connection cable (130) in a region in which the cable is guided out of the cylindrical housing (120), so that an exit radius up to a limit defined by the bend-limiting element (140) can be freely selected and the cable can be led away at any angle,
**characterized in that**
the formation (S140) of the bend-limiting element (140) comprises injection molding onto the sensor housing (120) as a trumpet-shaped injection-molded part made of the same material as the overmolding compound and encompassing the bend-limiting element (140) around the connection cable (130),
and wherein the sensor housing (120) is formed by a metal sleeve in which the overmolding compound with embedded sensor element is formed.

## Revendications

1. Capteur de vitesse de véhicule avec un élément de capteur (110), un boîtier de capteur cylindrique (120) dans lequel l'élément de capteur (110) est logé, et un câble de raccordement électrique (130) qui sort du boîtier de capteur (120), dans lequel l'élément de capteur (110) est surmoulé d'une masse de surmoulage, dans lequel
un élément de limitation de flexion (140) est conçu pour limiter un rayon de courbure (R) du câble de raccordement (130) directement dans une zone de sortie du câble de raccordement (130) hors du boîtier de capteur cylindrique (120), de sorte qu'un rayon de sortie jusqu'à une limitation, qui est définie par l'élément de limitation de flexion (140), peut être librement sélectionné et le câble dévié sous chaque angle, **caractérisé en ce que**
l'élément de limitation de flexion (140) est constitué d'une pièce moulée par injection sur le boîtier de capteur (120) à partir d'un matériau identique à celui de la masse de surmoulage, et
s'étend en forme de trompette autour du câble de raccordement (130), et
**en ce que**
le boîtier de capteur (120) comprend une douille métallique dans laquelle la masse de surmoulage est formée avec l'élément de capteur incorporé.

2. Capteur de vitesse de véhicule selon la revendication 1,
**caractérisé en ce que**
l'élément de limitation de flexion (140) limite le rayon de courbure (R) à la fois par une valeur maximale et/ou une valeur minimale.

3. Capteur de vitesse de véhicule selon l'une quelconque des revendications précédentes,
**caractérisé en ce que**
l'élément de limitation de flexion (140) est conçu pour empêcher ou au moins compliquer une sortie du câble de raccordement (130) parallèlement à l'axe axial du boîtier de capteur cylindrique (120).

4. Procédé destiné à la fabrication d'un capteur de vitesse de véhicule, avec :
- la mise à disposition (S110) d'un élément de capteur (110) ;
- la formation (S120) d'un boîtier de capteur cylindrique (120) à partir d'une masse de surmoulage, qui incorpore au moins partiellement l'élément de capteur (110) par surmoulage ;
- la formation (S130) d'un câble de raccordement électrique (130) qui sort du boîtier de capteur (120),
- la formation (S140) d'un élément de limitation de flexion (140) pour limiter un rayon de courbure (R) du câble de raccordement (130) dans une zone de sortie du boîtier cylindrique (120), de sorte qu'un rayon de sortie jusqu'à une limitation, qui est définie par l'élément de limitation de flexion (140), peut être librement sélectionné et le câble dévié sous chaque angle,
**caractérisé en ce que**
la formation (S140) de l'élément de limitation de flexion (140) comprend un moulage par injection sur le boîtier de capteur (120) en tant que pièce moulée en forme de trompette à partir d'un matériau identique à celui de la masse de surmoulage et l'enveloppement de l'élément de limitation de flexion (140) autour du câble de raccordement (130),
et dans lequel le boîtier de capteur (120) est formé avec une douille métallique dans laquelle la masse de surmoulage avec l'élément de capteur incorporé est formée.
